Europäisches Patentamt

**European Patent Office**

Office européen des brevets

(11) Publication number: **0 066 335**
**A2**

(12) **EUROPEAN PATENT APPLICATION**

(21) Application number: **82200620.1**

(22) Date of filing: **19.05.82**

(51) Int. Cl.³: **F 16 B 12/48**

(30) Priority: **21.05.81 IT 2187081**

(43) Date of publication of application:
**08.12.82 Bulletin 82/49**

(84) Designated Contracting States:
**AT BE CH DE FR GB LI LU NL SE**

(71) Applicant: **CAMAR S.p.A.**
**Via Necchi, 46**
**I-22060 Figino Serenza (Como)(IT)**

(72) Inventor: **Cattaneo, Carlo**
**Via Leornardo Da Vinci**
**I-22060 Figino Serenza (Como)(IT)**

(74) Representative: **Martegani, Franco et al,**
**Ing. Barzanò & Zanardo S.p.A. Via Borgonuovo, 10**
**I-20121 Milano(IT)**

(54) Union piece for securing a leg to the bottom panel of a piece of furniture.

(57) The invention relates to a union piece for securing a leg to the bottom panel of a piece of furniture, which comprises a plurality of resiliently yielding tubular plugs (11, 12, 13) cooperating with respective expansion dowels which are coaxial therewith (16) and are separated therefrom by rupturable detent means (17). A seat (20) is further provided for stably securing the leg (19) to the piece of furniture concerned.

Fig. 2

-|-

Many union systems are known which are intended to securing a leg to the bottom panel of a piece of furniture, which are provided with saw-tooth shaped lugs which are forcibly introduced into holes formed through the bottom panel in question.

Inasmuch as such unions are made of a plastics material, the saw-tooth expansions are severed as they are forcibly introduced into seatings of harder materials, such as for example the synthetic resin bonded laminates which lines the panels made with wood cuttings which are used for making many pieces of furniture.

The result is, regrettably, an unstable bond and the troubles stemming therefrom need not to be insisted upon.

An object of the present invention is to do away with the shortcomings enumerated above and, having this objective in view, it has been envisaged to provide a union piece of the kind composed of a single piece of a plastics material comprising, on either side, a plurality of lugs shaped in a saw-tooth fashion, and, on the opposite side, a seat adapted to receive the leg of the piece of furniture concerned, said union piece being

2.

characterized in that each lug has a tubular form, is resiliently yieldable and cooperates with an expansion dowel formed coaxially with the lug and separated therefrom by rupturable detent means.

By so doing, the resiliently yieldable lugs may be introduced into the holes formed through the bottom panel of the piece of furniture concerned by using a minimum force, which is such as not to jeopardize in the slightest the integrity of the saw-tooth array, whereafter the lugs are expanded by hammering the dowels in the interior of the lugs themselves, so as to cause the saw-teeth to engage the hole walls.

Preferably, the lugs have, alongside their generating lines, guiding slits into which matching ribs formed on the dowels so as to protrude therefrom.

The structural and functional features of the invention and its advantages over the prior art will become still clearer from the ensuing exemplary description, aided by the accompanying drawings, wherein :

FIGURE 1 is an exploded view showing a union piece made according to the invention, which is shown when about to be mounted on the bottom panel of a piece of furniture, the leg being separate therefrom.

FIGURE 2 is a view akin to that of FIGURE 1, but showing the union piece secured to the bottom panels of the piece of furniture with the leg secured thereto.

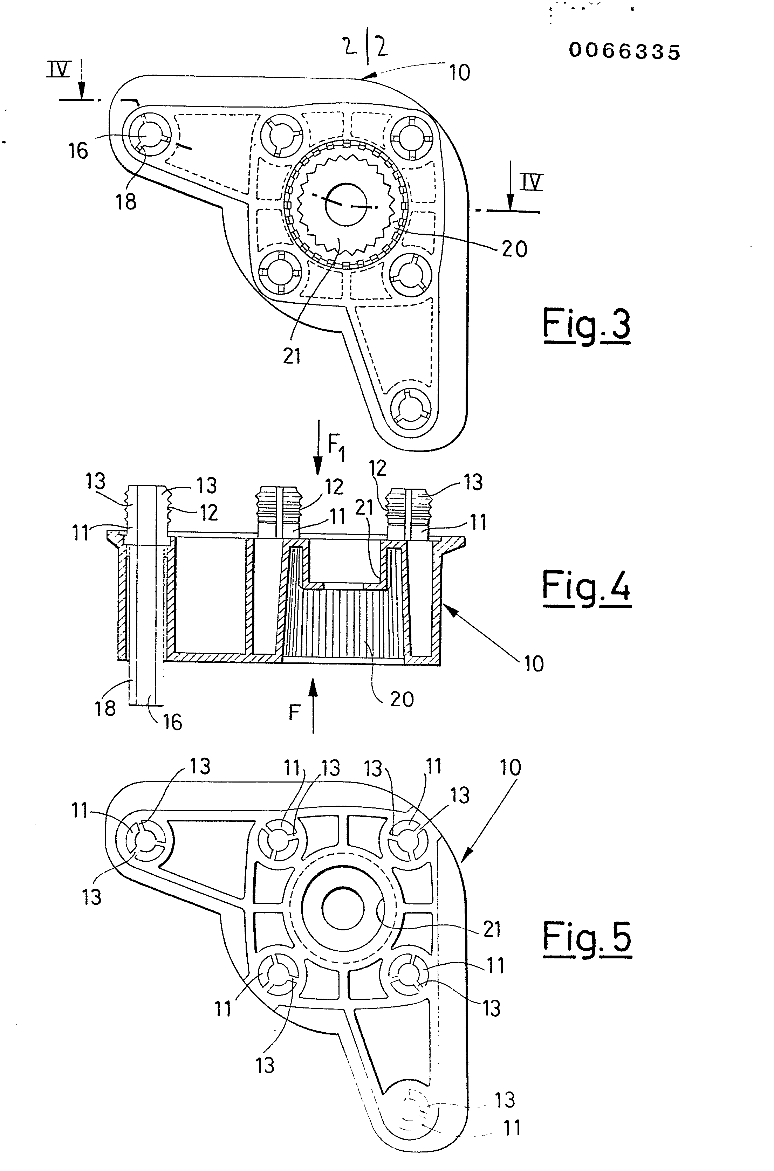

FIGURE 3 is a plan view as viewed along the direction of the arrow F of FIGURE 4.

FIGURE 4 is a cross-sectional view, taken along the line IV-IV of FIGURE 3, and

FIGURE 5 is a plan view as viewed in the direction of the arrow $F_1$ of FIGURE 4.

With reference to the drawings, the union piece in question is generally indicated at 10 and is structurally composed of a single boxlike piece of a plastics material, for example having an angular configuration.

According to the invention, from the bottom surface of the union piece 10 there extends a plurality of tubular lugs 11, which are externally shaped in a sawtooth-like configuration 12, each lug having, moreover, radial slits 13 which render the lug resiliently yieldable.

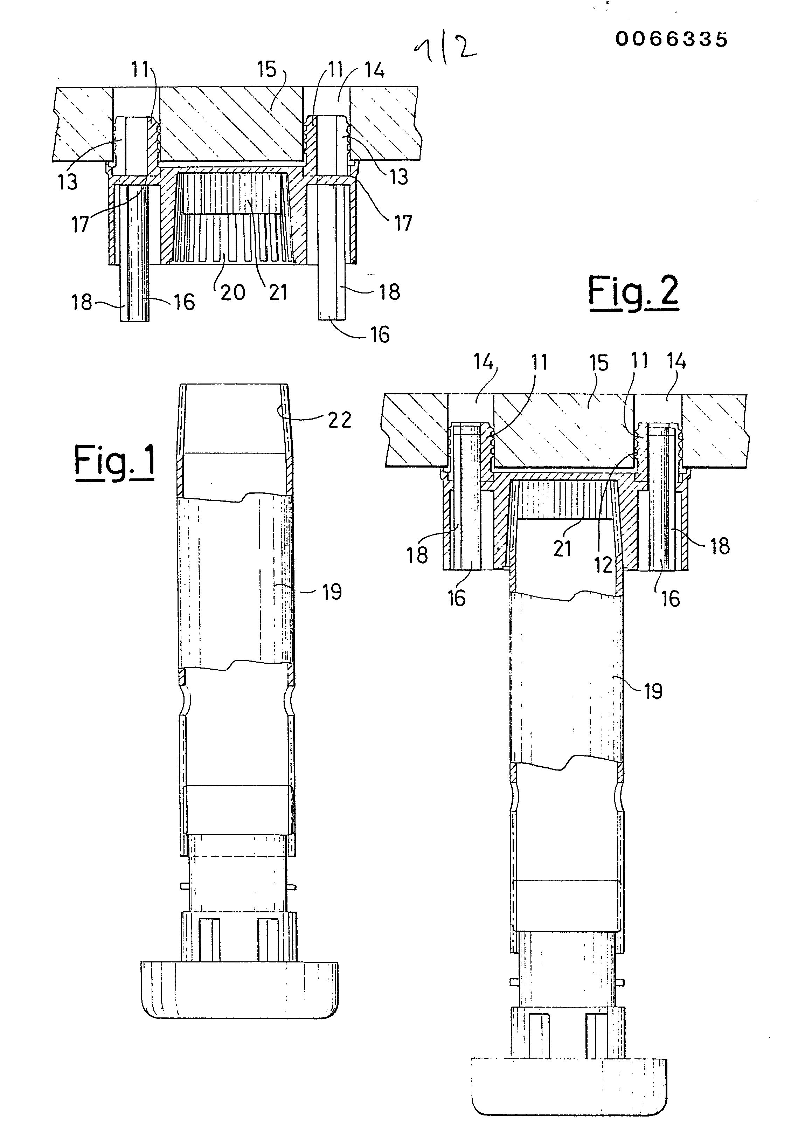

Thus, the lugs 11 can be introduced, with a minimum force, into holes 14 which are formed on the bottom panel 15 of the piece of furniture (FIGURE 1). By so doing, the integrity of the sawtooth projections 12 is preserved.

In order to ensure a reliable fit of the sawteeth 12 in the walls of the holes 14, each of the lugs 12 cooperates with an expansion dowel 16, which is formed coaxially with them on the side away of the union piece.

The dowel 16 is separated from the relevant tubular lug 11 by means of rupturable detent extensions 17 and has, moreover, ribs 18 which protrude radially, in correspondence with the slits 13 of said lug.

4.

By so doing, the dowels 16 can be hammered into the lugs 11 so as to expand the latter so that the saw-teeth 12 can engage the walls of the holes 14 (FIG. 2).

The ribs 18 which are inserted into the slits 12 ensure quite a satisfactory union of the component parts concerned.

The leg 19 of the piece of furniture can thus be inserted into a seat 20 which is provided on the union piece on the side away of that of the lugs 11.

The seat can simply be conical, as it is convent'-ionally used, or it can have, according to the invention, a central multi-ruled piece 21 which is self-tapped as a leg 19, having an internal screw-thread 22, is screw-ably inserted therein.

C L A I M S :

1. A union piece for securing a leg to the bottom panel of a piece of furniture, of the kind consisting of a single piece (10) of a plastics material and comprising on either side a plurality of saw-toothed (12) lugs (11) and on the opposite side a seat (20) adapted to receive the leg, characterized in that each lug (11) is tubular, is resiliently yieldable and cooperates with an expansion dowel (16) formed coaxially with the lug (11) and separated therefrom by rupturable detent means (17).

2. A union piece according to Claim 1, characterized in that said lugs (11) have guiding radial slits (13) into which corresponding ribs (18) are inserted which project from said dowels (16).

3. A union piece according to Claim 1, characterized in that said seat (20) has a multi-ruled portion (24) adapted to be self-tapped by screwing an internally screw-threaded (22) leg (19) thereinto.

Fig. 2

Fig. 1

0066335

16

18

IV

IV

10

20

21

## Fig.3

F₁

13 13 12 12 21
12 11 13 11

18 16 F 20 10

## Fig.4

13 11 13 13 11 10
11 13

13

21

11

11 13

11

13

## Fig.5